# EUROPÄISCHE PATENTSCHRIFT

(11) **EP 0 719 615 B1**
(45) Veröffentlichungstag und Bekanntmachung des Hinweises auf die Patenterteilung: **21.04.1999**
(21) Anmeldenummer: 95119996.7
(22) Anmeldetag: 18.12.1995
(51) Int. Cl.: B23Q 3/155, B23Q 3/157

(54) **Programmierbare Werkzeugmaschine**
Programmable machine tool
Machine-outil programmable

(30) Priorität: 28.12.1994 DE 4446963
(43) Veröffentlichungstag der Anmeldung: 03.07.1996
(73) Patentinhaber: DECKEL MAHO GmbH, D-87459 Pfronten (DE)
(72) Erfinder: Hoppe, Gerd, D-34317 Habichtswald (DE)
(74) Vertreter: Beetz & Partner Patentanwälte

(56) Entgegenhaltungen:
- EP-A- 0 060 638
- DE-A- 4 311 469

## Beschreibung

Die Erfindung betrifft eine programmierbare Werkzeugmaschine mit automatischem Werkzeugwechsel, bestehend aus einem ortsfesten Maschinenständer, einem auf dem Maschinenständer in zwei horizontalen Koordinatenachsen verfahrbaren Kreuzschlitten, einem an der Vorderseite des Kreuzschlittens in der vertikalen Koordinatenachse verfahrbar montierten Senkrecht-Fräskopf, einem am Maschinenständer montierten Werkstücktisch, einem Werkzeugmagazin mit vertikal ausgerichteten Werkzeugen und einer im Anfahrbereich des Fräskopfes angeordneten Wechselstation und aus einer programmierbaren Steuereinheit.

Bei herkömmlichen Werkzeugmaschinen werden in der Regel zum automatischen Wechsel der verschiedenen Werkzeuge besondere Werkzeugwechsler verwendet, welche das jeweilige Werkzeug dem Magazin entnehmen, in eine vorgegebene Position vor der Arbeitsspindel transportieren und in die Spindel übergeben - und umgekehrt. Aufgrund der verschiedenen Betätigungs- und Bewegungsvorgänge sind diese Werkzeugwechsler technisch aufwendig und kostspielig. Darüber hinaus erfordern sie einen zusätzlichen Platz an der Werkzeugmaschine sowie einen erheblichen steuerungstechnischen Aufwand, der sich nachteilig auf die Betriebskosten und auch auf die Übergabezeiten auswirken kann.

Aus der EP-A-0 060 638 ist ein automatisches Werkzeugwechsel-System für Werkzeugmaschinen bekannt, bei dem an einer oder auch an beiden Seiten eines auf einem Unterbau horizontal verfahrbaren Werkstücktisches ein Werkzeugmagazin mit lediglich von oben zugänglichen Werkzeugaufnahmen angeordnet ist. Jedes Werkzeugmagazin verfügt über einen eigenen Drehantrieb und ist zusammen mit dem Werkstücktisch auf dem Unterbau derart verfahrbar angeordnet, daß seine Wechselstation in die Achse einer vertikal verfahrbaren Arbeitsspindel gebracht werden kann. Durch eine Absenkbewegung der Arbeitsspindel wird ein gebrauchtes Werkzeug in eine freie Werkzeugaufnahme eingelegt und nach einer entsprechenden Verdrehbewegung des Werkzeugmagazins kann ein neues vorgesehenes Werkzeug in die Arbeitsspindel eingeführt werden. Bei diesem bekannten Wechselsystem sind zwar keine gesonderten Werkzeugwechsler erforderlich, es ergeben sich jedoch die Nachteile relativ langer Wechselzeiten und einer begrenzten Kapazität der verwendeten Magazine.

Ferner ist aus dem DE-U-93 05 653.2 eine gattungsgemäße Werkzeugmaschine in sog. Fahrständer-Bauweise bekannt, bei welcher auf einem formsteifen stationären Maschinengestell ein Werkstücktisch und ein in zwei horizontalen Koordinatenachsen motorisch verfahrbare Kreuzschlitten angeordnet sind, an dessen Vorderseite ein Senkrecht-Fräskopf in der vertikalen Koordinatenachse motorisch verfahrbar angeordnet ist. An dem in Längsrichtung des Maschinengestells verfahrbaren Schlitten ist ein Kettenmagazin mit vertikalen Werkzeugaufnahmen angeordnet, das den Schlitten umgibt und an der Schlittenvorderseite von einer zumindest teilweise beweglichen Schutzhaube abgedeckt wird. Zum Wechsel eines Werkzeuges verfährt der Fahrständer in Querrichtung (Y-Achse) auf dem Schlitten, bis sich die Achse der Arbeitsspindel genau über der mittigen Wechselstation des Magazins befindet. Nach Öffnen der Schutzhaube kann durch eine Absenkbewegung des Fräskopfes ein gebrauchtes Werkzeug in eine in der Wechselstation befindliche freie Werkzeugaufnahme eingelegt werden. Nach einer vertikalen Aufwärtsbewegung der Frässpindel kann das Kettenmagazin so weit verfahren werden, bis sich das nächstfolgende Werkzeug in der Wechselstation befindet. Durch eine anschließende Absenkbewegung des Fräskopfes mit der Arbeitsspindel kann dieses neue Werkzeug in die Spindel eingeführt und festgeklemmt werden. Anschließend wird das in der Arbeitsspindel fixierte neue Werkzeug durch eine kurze Horizontalbewegung aus der Werkzeugaufnahme des Magazins herausgezogen, woraufhin der Arbeitsbetrieb mit diesem neuen Werkzeug begonnen werden kann. Es ist offensichtlich, daß diese vorstehend beschriebenen Übergabevorgänge eine relativ lange Zeitdauer erfordern. Darüber hinaus werden bei diesem bekannten Wechselsystem eine Vielzahl von Bauteilen benötigt, was zu einem erheblichen Konstruktionsaufwand führt.

Aufgabe der Erfindung ist es, eine gattungsgemäße programmgesteuerte Werkzeugmaschine mit automatisiertem Werkzeugwechsel zu schaffen, die schnelle Werkzeugwechsel mit einem geringeren konstruktiven und steuerungstechnischen Aufwand ermöglicht.

Diese Aufgabe wird erfindungsgemäß dadurch gelöst, daß das Werkzeugmagazin zwei Tellermagazine umfaßt, die gemeinsam an einer Seite des Arbeitsbereichs neben dem Werkstücktisch an einer am Maschinenständer befestigten Tragkonstruktion montiert sind, wobei eines der Tellermagazine zur Aufnahme des gebrauchten Werkzeugs aus der Arbeitsspindel und das andere Tellermagazin zum Einwechseln eines neuen Werkzeugs in die Arbeitsspindel vorgesehen ist.

Die Verwendung von zwei gesonderten Tellermagazinen gewährleistet eine ausreichende Speicherkapazität an Werkzeugen, wobei die seitliche Anordnung beider Tellermagazine an einer Seite des Werkstücktisches kurze Wechselzeiten begünstigt, weil dadurch die Wechselstationen beider Magazine dicht nebeneinanderliegen und nacheinander von der Arbeitsspindel in kurzen Fahrzeiten angefahren werden können. Die erfindungsgemäße Verwendung von zwei Tellermagazinen eröffnet die Möglichkeit, daß sich bereits vor Beginn eines Wechselvorganges eine leere Werkzeugaufnahme in der Wechselstation des einen Magazins und gleichzeitig eine das neu einzuwechselnde Werkzeug enthaltende Werkzeugaufnahme in der Wechselstation des anderen Werkzeugmagazins befinden. Die bei bekannten Magazinen bisher notwendigen Verfahrbewegungen des Werkzeugmagazins während eines Wechselvorganges werden vermieden, wodurch sich die Wechselzeiten erheblich verkürzen und der konstruktive bzw. steuerungstechnische Aufwand auf ein Minimum verringert werden kann.

Zum Wechsel eines gebrauchten Werkzeuges wird die Arbeitsspindel horizontal bis vor die Wechselstation des einen Magazins gefahren, in welcher sich dann eine leere Werkzeugaufnahme befindet. Vor oder während dieser Anfahrbewegung wird die Höhenlage des Werkzeuges durch eine entsprechende Axialverschiebung der Arbeitsspindel so eingestellt, daß das Werkzeug radial in diese leere Werkzeugaufnahme des Magazins eingeschoben werden kann. Nach Lösen der spindelinneren Fixiermittel erfolgt eine kurze Aufwärtsbewegung der Arbeitsspindel, womit der Übergabevorgang des gebrauchten Werkzeuges an das Magazin abgeschlossen ist. Daraufhin wird die Arbeitsspindel in Richtung der Wechselstation des mit dem neuen Werkzeug besetzten zweiten Magazins verfahren, bis die Spindelachse mit der in dieser Wechselposition befindlichen Achse der Werkzeugaufnahme bzw. des darin befindlichen Werkzeugkegels fluchtet. Durch eine Absenkbewegung der Arbeitsspindel gelangt der Werkzeugkegel in Eingriff mit der spindelinneren Kegelaufnahme, deren Fixiermittel aktiviert werden. Durch eine kurze Vertikalbewegung zum Lösen und eine nachfolgende Horizontalbewegung der Arbeitsspindel in Richtung des Radialstrahles des Magazins wird das neue Werkzeug vom zweiten Magazin gelöst, woraufhin ein Bearbeitungsvorgang am Werkstück durchgeführt werden kann.

Ein wesentlicher betriebstechnischer Aspekt der Erfindung liegt darin, daß die relativ dicht nebeneinander positionierten Wechselstationen der beiden Tellermagazine von der Arbeitsspindel nacheinander auf kurzen Wegen angefahren werden können, wobei die Bereitstellung einer leeren Werkzeugaufnahme in dem einen Magazin und die Bereitstellung des neu einzuwechselnden Werkzeugs in dem anderen Magazin bereits vor Beginn eines Wechselvorganges durchgeführt wird. Besondere eigenständige Werkzeugwechsler mit Greifern sind für den Werkzeugwechsel nicht erforderlich.

Obgleich die beiden nebeneinander angeordneten Tellermagazine in Richtung der Spindelachse, d. h. vertikal, motorisch verfahrbar ausgebildet sein können, ist es zur weiteren konstruktiven Vereinfachung zweckmäßig, daß die Arbeitsspindel die zum Eingriff und Lösen der Werkzeugkegel erforderlichen Axialbewegungen ausführt.

Gemäß einer zweckmäßigen Ausgestaltung der Erfindung sind die beiden Tellermagazine durch jeweils gesonderte Antriebsaggregate schrittweise um einen durch die Anzahl der Werkzeugaufnahmen vorgesehenen Drehwinkel verdrehbar, wobei dieses Antriebsaggregat einen Schrittmotor, ein sog. Malteserkreuz-Getriebe oder auch einen anderen geeigneten Schrittmacher, enthalten kann. Die Verwendung von aus einfachen und billigen Einzelteilen bestehenden Malteserkreuz-Getrieben ermöglicht den Einsatz von kostengünstigen Elektromotoren, die ggf. zusammen mit einem Schneckenradgetriebe in großen Stückzahlen als Scheibenwischerantriebe für Kraftfahrzeuge hergestellt werden.

Ein wesentlicher Vorzug der erfindungsgemäßen Werkzeugmaschine besteht darin, daß die Werkzeugwechsel mit einfachen konstruktiven Mitteln und geringstem programmtechnischen Aufwand durchgeführt werden können, ohne daß das Bedienungspersonal über fundierte Programmierkenntnisse verfügen müßte.

Ferner ergibt sich durch die konstruktive Ausbildung der Tellermagazine, insbesondere durch das Vorsehen der gegenüber der ortsfesten Tragkonstruktion verdrehbar gelagerten Säule, der Vorteil, daß die Tragkonstruktion sich etwa in Höhe des horizontal ausgerichteten Werkstücktisches befindet, während die Magazinteller in einem ausreichend hohen Niveau liegen, um auch lange Werkzeuge aufnehmen zu können und die von der Arbeitsspindel auszuführenden Vertikalbewegungen klein zu halten.

Weitere Vorzüge und Besonderheiten der erfindungsgemäßen Werkzeugmaschine ergeben sich aus der folgenden Beschreibung eines Ausführungsbeispiels anhand der Zeichnung. Es zeigen:
- Fig. 1: eine Werkzeugmaschine in schematischer Seitenansicht;
- Fig. 2: eine Draufsicht auf den Werkstücktisch mit dem Arbeitsbereich der Werkzeugspindel und auf zwei Werkzeugmagazine mit dem durch Pfeile gekennzeichneten Verfahrweg der Arbeitsspindel bei einem Werkzeugwechsel-Vorgang;
- Fig. 3A, 3B: ein Werkzeugmagazin im Axialschnitt und in teilgeschnittener Draufsicht seines Malteser-Getriebes.

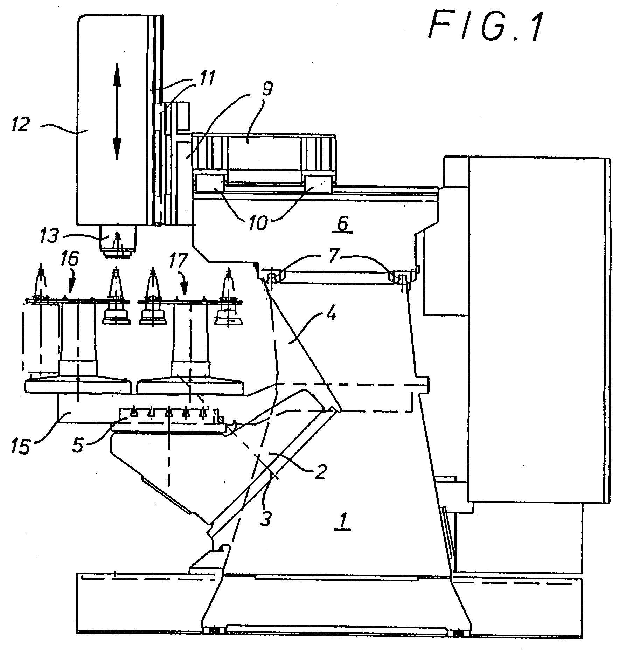

Die in Fig. 1 schematisch in Seitenansicht dargestellte Werkzeugmaschine enthält einen Ständer 1 als Unterbau, an dessen Stirnseite eine Konsole 2 um eine schräge 45°-Achse 3 verdrehbar in einer Ausnehmung 4 angeordnet ist. An einem seitlichen Tragansatz dieser Konsole 2 ist ein verdrehbarer Rundtisch 5 montiert. Auf der Oberseite des Ständers 1 ist ein Schlitten 6 in Führungsschienen 7 senkrecht zur Zeichenebene der Fig. 1 verfahrbar angeordnet. Dieser im Querschnitt vorzugsweise U-förmig ausgebildete Längsschlitten 6 enthält sich in der Zeichenebene der Fig. 1 erstreckende Führungsschienen 8, an denen ein Querschlitten 9 mittels Führungsschuhen 10 horizontal verfahrbar geführt ist. Die Antriebsmotoren und Übertragungselemente für die Verfahrbewegungen der vorstehend genannten Bauteile sind in Fig. 1 nicht dargestellt. An der Stirnseite des Querschlittens 9 befindet sich eine Geradführung 11, bestehend aus Führungsschienen und Führungsschuhen, zur Halterung und Führung eines vertikalen Fräskopfes 12, in den eine Arbeitsspindel 13 sowie ein Antriebsmotor mit Getriebe eingebaut sind. Mit Hilfe der Führungen 7, 10 und 11 ist die Arbeitsspindel in den drei Koordinatenachsen, d. h. in der Horizontalebene und auch in der Vertikalen, motorisch verfahrbar.

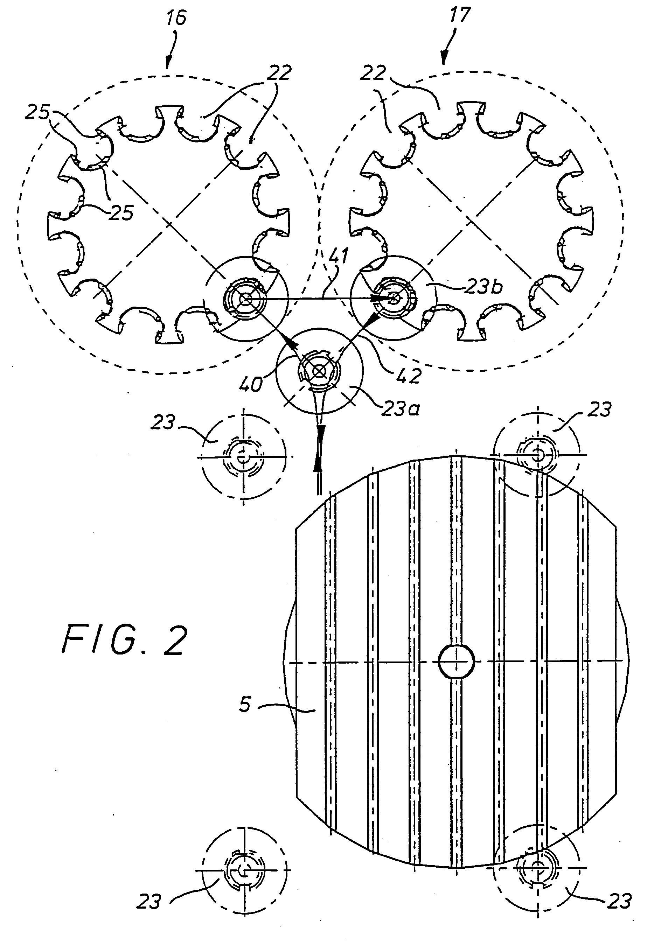

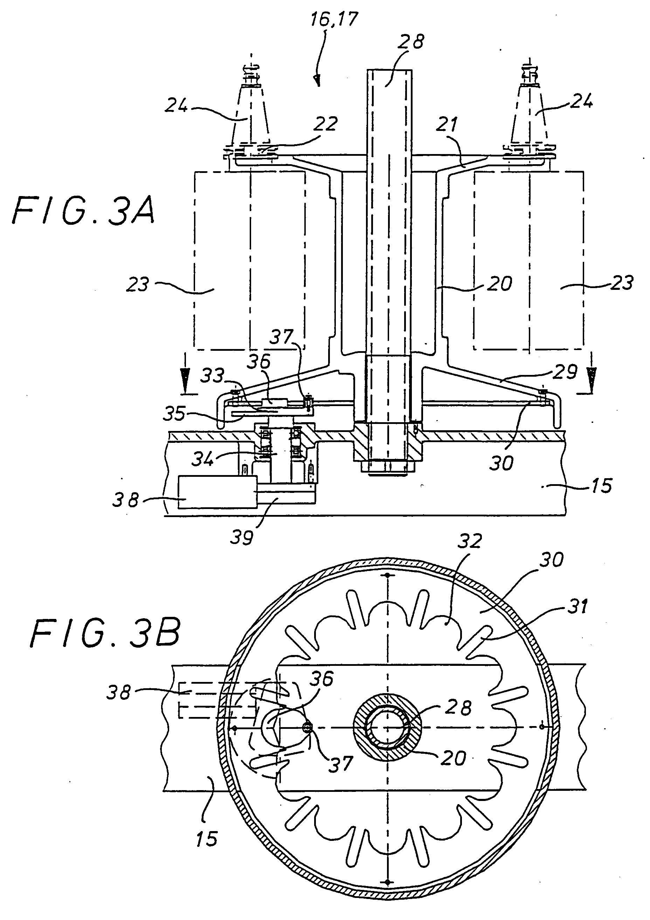

In Fig. 1 hinter dem Werkstücktisch 5 ist am Ständer ein nach vorn auskragender formsteifer Horizontalträger 15 starr befestigt, auf dem zwei hier als Tellermagazine ausgeführte Werkzeugmagazine 16, 17 montiert sind. Jedes dieser Tellermagazine weist - wie insbesondere in Fig. 3A gezeigt - einen am oberen Ende einer Säule 20 montierten Drehteller 21 auf, an dessen Außenumfang regelmäßig beabstandete Werkzeugaufnahmen 22 ausgebildet sind (vgl. auch Fig. 2). Diese Werkzeugaufnahmen 22 dienen zur Halterung von in Fig. 3 strichpunktiert dargestellten Werkzeugen 23 mit nach oben weisendem Werkzeugkegel 24. Die kreissegmentförmigen Werkzeugaufnahmen 22 weisen jeweils insgesamt drei nach innen vorspringende Ansätze 25 als Auflage für den am breiteren Ende des Werkzeugkegels in üblicher Weise ausgebildeten Ringkragen auf, wobei im Bereich dieser Ansätze 25 weitere Mittel 26 zur Zentrierung und Verdrehsicherung der jeweiligen Werkzeugkegel vorgesehen sind.

Die hohlzylindrisch ausgebildete Säule 20 ist bei der in Fig. 3A dargestellten Ausführung zumindest mit ihrem unteren Teil an einem vertikalen zylindrischen Holm 28 drehbar gelagert, dessen unteres Ende im Horizontalträger 15 drehfest befestigt ist. Ferner ist am unteren Endteil der Säule 20 eine konische Scheibe 29 mit vertikalem Außenrand angeformt, in deren Innenraum eine Ringscheibe 30 z. B. mittels Schrauben befestigt ist, die an ihrem Innenumfang eine der Anzahl der Werkzeugaufnahmen entsprechende Anzahl an kurzen Radialschlitzen 31 und zwischenliegenden halbkreisförmigen Ausnehmungen 32 aufweist (vgl. Fig. 3B). Diese Ringscheibe 30 bildet einen Teil eines sog. Malteserkreuz-Getriebes zur schrittweisen Verdrehung der Säule 20 mit den Werkzeugaufnahmen 22. Den Antriebsteil dieses Malteserkreuz-Getriebes bildet eine in Fig. 3A dargestellte Kurbel 33, deren Welle 34 im Horizontalträger 15 gelagert ist und die an ihrem oberen Ende eine Scheibe 25 aufweist, auf welcher ein endseitiger Treibzapfen 27 sowie ein etwa halbkreisförmiges Treibglied 28 befestigt sind, welche bei einer Verdrehung der Welle 34 in die Radialschlitze 31 bzw. die etwa halbkreisförmigen Ausnehmungen 32 wechselweise eingreifen und damit die schrittweise Verdrehung dieser Ringscheibe 30 herbeiführen. Die Welle 34 dieser Kurbel 33 wird von einem im Horizontalträger 15 montierten Motor 38 über ein Schnekkengetriebe 39 angetrieben.

Der Funktionsablauf eines vollen Werkzeugwechsels wird im folgenden anhand der Fig. 2 beschrieben, in welcher der Arbeitsbereich der Werkzeugmaschine durch vier Endstellungen des Werkzeuges 23 angegeben sind. Es sei vorausgesetzt, daß ein Bearbeitungsvorgang an einem auf dem Werkstücktisch 5 aufgespannten Werkstück abgeschlossen ist und das dabei verwendete Werkzeug 23a gegen ein weiteres Werkzeug 23b ausgetauscht werden soll. Für diesen Wechselvorgang verfährt der Fräskopf 12 in Richtung des Pfeiles 40 in die in der Wechselposition befindliche noch leere Werkzeugaufnahme des ersten Werkzeugmagazins 16 etwa in die dargestellte Position. Während dieser Anfahrbewegung oder auch nach Erreichen der dargestellten Position wird durch eine Vertikalbewegung des Fräskopfes 12 die Arbeitsspindel in eine Höhenlage gebracht, in welcher der am Werkzeugkegel ausgebildete Ringkragen sich in gleicher Höhe wie die Werkzeugaufnahme 24 befindet. Darauf folgt eine Einschiebebewegung auf dem strichpunktiert eingezeichneten Radialstrahl, bis der Ringkragen am Werkzeugkegel die in der Werkzeugaufnahme 22 ausgebildeten Auflager-Ansätze kontaktiert und die Mittel zum Zentrieren und zur Verdrehsicherung wirksam werden. Durch einen entsprechenden Steuerbefehl wird die spindelinnere Zange vom Werkzeugkegel gelöst und die Arbeitsspindel 13 führt zusammen mit dem Vertikalkopf 12 eine Vertikalbewegung aus, deren Endlage in Fig. 1 dargestellt ist. Zur Aufnahme des neuen Werkzeuges 23b erfolgt eine Horizontalbewegung der Arbeitsspindel in Richtung des Pfeiles 41, bis die Spindelachse genau über der Achse des neuen Werkzeuges 23b steht. Nach einer vertikalen Absenkbewegung und dem Aktivieren der Klemmzange wird der Werkzeugkegel des neuen Werkzeuges 23b in der Arbeitsspindel fixiert. Nach einer kurzen vertikalen Lösebewegung wird die Arbeitsspindel zusammen mit dem neuen Werkzeug in Richtung des Pfeiles auf dem Radialstrahl des zweiten Magazins 17 bewegt und damit der Werkzeugkegel des Werkzeuges 23b aus seiner Werkzeugaufnahme radial herausgezogen. Damit ist ein Werkzeugwechsel vollzogen und die Arbeitsspindel kann in üblicher Weise in die neue Arbeitsposition verfahren werden.

Die Erfindung ist nicht auf das dargestellte Ausführungsbeispiel beschränkt. So kann beispielsweise statt der verwendeten zwei Tellermagazine 16, 17 auch nur ein einziges Magazin z. B. in Form eines Kettenmagazins Verwendung finden, bei welchem nur jede zweite Werkzeugaufnahme mit einem Werkstück besetzt sein kann, so daß die Möglichkeit besteht, die gebrauchten Werkzeuge unmittelbar neben ein neues Werkzeug im Magazin anzuordnen, was die angestrebt kurzen Verfahrwege der Arbeitsspindel bei einem Wechselvorgang ergibt. Darüber hinaus sind auch andere Ausführungen bzw. Abwandlungen möglich. So können beispielsweise statt des hier verwendeten Malteserkreuz-Schaltgetriebes auch andere Antriebsarten für die schrittweise oder auch eine kontinuierliche Verdrehung bzw. Transportbewegung der Magazine verwendet werden.

## Patentansprüche

1. Programmierbare Werkzeugmaschine mit automatischem Werkzeugwechsel, bestehend aus
- einem ortsfesten Maschinenständer (1),
- einem auf dem Maschinenständer in zwei horizontalen Koordinatenachsen verfahrbaren Kreuzschlitten (6, 9),
- einem am Kreuzschlitten (6, 9) in der vertikalen Koordinatenachse verfahrbaren Senkrecht-Fräskopf (12),
- einem am Maschinenständer montierten Werkstücktisch (5),
- einem Werkzeugmagazin (16, 17) mit vertikal ausgerichteten Werkzeugen und einer im Anfahrbereich des Fräskopfes (12) angeordneten Wechselstation und
- einer programmierbaren Steuereinheit,
**dadurch gekennzeichnet,** daß
- das Werkzeugmagazin zwei Tellermagazine (16, 17) umfaßt, die gemeinsam an einer Seite des Arbeitsbereichs neben dem Werkstücktisch (5) an einer am Maschinenständer (1) befestigten Tragkonstruktion (15) montiert sind,
- wobei eines der Tellermagazine (16 bzw. 17) zur Aufnahme des gebrauchten Werkzeugs aus der Arbeitsspindel (13) und das andere Tellermagazin (17 bzw. 16) zum Einwechseln eines neuen Werkzeuges in die Arbeitsspindel vorgesehen ist.

2. Werkzeugmaschine nach Anspruch 1,
dadurch gekennzeichnet,
daß die Wechselposition (W1, W2) jedes Tellermagazins (16, 17) auf einem Radialstrahl liegt, der zur Verbindungslinie der beiden Magazin-Mittelpunkte jeweils einen Winkel von 45° einschließt.

3. Werkzeugmaschine nach Anspruch 1 oder 2,
dadurch gekennzeichnet,
daß die Tragkonstruktion (15) ein an der Frontseite des Maschinenständers (1) starr befestigter, nach vorn auskragender formsteifer Horizontalträger (15) ist, auf dem die beiden Tellermagazine (16, 17) hintereinander und gesondert verdrehbar montiert sind.

4. Werkzeugmaschine nach einem der Ansprüche 1 bis 3,
dadurch gekennzeichnet,
daß jedes Tellermagazin (16, 17) eine Säule (20) aufweist, an deren oberem Ende ein Magazinteller (21) befestigt ist und an deren unterem Endteil ein in der Tragkonstruktion (15) angeordnetes Antriebsaggregat (30 bis 38) angreift, das den Magazinteller (21) schrittweise um einen durch die Anzahl der Werkzeugaufnahmen (22) vorgegebenen Drehwinkel verdreht.

5. Werkzeugmaschine nach Anspruch 4,
dadurch gekennzeichnet,
daß die hohlzylindrische Säule (20) an einem rohrförmigen vertikalen Holm (28) drehbar gelagert ist, der mit seinem unteren Ende in der Tragkonstruktion (15) fixiert ist.

6. Werkzeugmaschine nach Anspruch 4 oder 5,
dadurch gekennzeichnet,
daß das Antriebsaggregat ein Malteserkreuz-Getriebe (30; 36, 37) enthält, dessen Ringscheibe (30) in dem verbreiterten Endteil (29) der Säule (20) befestigt ist und dessen Treibkurbel (33) zusammen mit einem Motor (38) in der Tragkonstruktion (15) angeordnet ist.

7. Werkzeugmaschine nach einem der Ansprüche 1 bis 6,
dadurch gekennzeichnet,
daß der Werkstücktisch (5) auf einer Konsole (2) montiert ist, die auf dem um 45° geneigten Boden einer in der Frontseite des Ständers (1) vorgesehenen Ausnehmung (4) um eine 45°-Achse (3) motorisch verdrehbar gelagert ist.

## Claims

1. Programmable machine tool with automatic tool change, comprising
- a stationary machine column (1),
- a compound slide (6, 9) movable on the machine column on two horizontal coordinate axes,
- a vertical milling head (12) movable on the compound slide (6, 9) on the vertical coordinate axis,
- a work table (5) mounted on the machine column,
- a tool magazine (16, 17) with vertically oriented tools and with a changing station arranged in the travelling range of the milling head (12) and
- a programmable control unit,
characterized in that
- the tool magazine comprises two plate magazines (16, 17) mounted together on one side of the working area next to the work table (5) on a supporting structure (15) fixed to the machine column (1),
- one of the plate magazines (16 or 17) being provided for the reception of the used tool from the work spindle (13) and the other plate magazine (17 or 16) being provided for the introduction of a new tool into the work spindle.

2. Machine tool according to Claim 1, characterized in that the changing position (W1, W2) of each plate magazine (16, 17) is located on a radial line including in each case an angle of 45° with the line connecting the two centre points of the magazines.

3. Machine tool according to Claim 1 or 2, characterized in that the supporting structure (15) is a rigid horizontal support (15) projecting forwards and rigidly fixed to the front side of the machine column (1), the two plate magazines (16, 17) being mounted on said support one behind the other and in such a way as to be separately rotatable.

4. Machine tool according to one of Claims 1 to 3, characterized in that each plate magazine (16, 17) has a pillar (20), to the upper end of which a magazine plate (21) is fixed and on the lower end part of which there acts a drive unit (30 to 38) which is arranged in the supporting structure (15) and rotates the magazine plate (21) stepwise about an angle of rotation preset by the number of tool receptacles (22).

5. Machine tool according to Claim 4, characterized in that the hollow-cylindrical pillar (20) is rotatably mounted on a tubular vertical bar (28) secured by its lower end in the supporting structure (15).

6. Machine tool according to Claim 4 or 5, characterized in that the drive unit includes a Geneva mechanism (30; 36, 37), the annular disc (30) of which is fixed in the widened end part (29) of the pillar (20) and the driving crank (33) of which is arranged together with a motor (38) in the supporting structure (15).

7. Machine tool according to one of Claims 1 to 6, characterized in that the work table (5) is mounted on a knee (2) which is mounted, in such a way as to be rotatable by a motor about a 45° axis (3), on the bottom, inclined by 45°, of a recess (4) provided in the front side of the column (1).

## Revendications

1. Machine-outil programmable avec changement automatique des outils, comprenant
- un bâti de machine (1) fixe,
- un chariot à mouvements croisés (6, 9) déplaçable sur le bâti de machine selon deux axes horizontaux de coordonnées,
- une tête de fraisage verticale (12) déplaçable sur le chariot à mouvements croisés (6, 9) sur l'axe vertical des coordonnées,
- une table porte-pièce (5) montée sur le bâti de machine
- un magasin pour outils (16, 17) avec des outils orientés verticalement et un poste de changement disposé dans la zone de mise en route de la tête de fraisage (12) et
- une unité de commande programmable,
caractérisée en ce que
- le magasin pour outils comprend deux magasins à plateau (16, 17) qui sont montés ensemble sur un côté de la zone de travail à côté de la table porte-pièce (5) sur une structure porteuse (15) fixée sur le bâti de la machine (1),
- l'un des magasins à plateau (16 ou 17) étant prévu pour le logement de l'outil utilisé à partir de la broche porte-outil (13) et l'autre magasin à plateau (17 ou 16) pour l'insertion d'un nouvel outil dans la broche porte-outil.

2. Machine-outil selon la revendication 1, caractérisée en ce que la position de changement (W1, W2) de chaque magasin à plateau (16, 17) se trouve sur un faisceau radial qui inclut respectivement un angle de 45° pour la ligne de jonction des deux centres de magasin.

3. Machine-outil selon la revendication 1 ou 2, caractérisée en ce que la structure porteuse (15) est un support horizontal fixé sur le côté frontal du bâti de machine (1), de forme rigide, formant saillie vers l'avant et sur lequel les deux magasins à plateau (16, 17) sont montés de façon à pivoter l'un derrière l'autre et séparément.

4. Machine-outil selon l'une quelconque des revendications 1 à 3, caractérisée en ce que chaque magasin à plateau (16, 17) présente une colonne (20) à l'extrémité supérieure de laquelle est fixé un plateau de magasin (21) et contre l'extrémité inférieure de laquelle s'applique un équipement moteur (30 à 38) qui est disposé dans la structure porteuse (15) et fait progressivement pivoter le plateau de magasin (21) d'un angle de rotation prédéfini par le nombre de logements d'outils (22).

5. Machine-outil selon la revendication 4, caractérisée en ce que la colonne (20) cylindrique creuse est montée à rotation sur un montant (28) tubulaire vertical qui, par son extrémité inférieure, est fixé dans la structure porteuse (15).

6. Machine-outil selon la revendication 4 ou 5, caractérisée en ce que l'équipement moteur comprend un mécanisme croix de Malte (30 ; 36, 37) dont le disque annulaire (30) est fixé dans l'extrémité (29) élargie de la colonne (20) et dont la manivelle motrice (33) est disposée en même temps qu'un moteur (38) dans la structure porteuse (15).

7. Machine-outil selon l'une quelconque des revendications 1 à 6, caractérisée en ce que la table porte-pièce (5) est montée sur une console (2) qui est placée sur le fond incliné à 45° d'un évidement (4) prévu dans le côté frontal du bâti (1) de façon à pivoter à l'aide d'un moteur autour d'un axe à 45° (3).
